# EUROPÄISCHE PATENTSCHRIFT

(11) **EP 2 557 547 B1**
(45) Veröffentlichungstag und Bekanntmachung des Hinweises auf die Patenterteilung: **06.10.2021**
(21) Anmeldenummer: 12179678.3
(22) Anmeldetag: 08.08.2012
(51) Int. Cl.: G08B 21/04, G01D 4/00, G01D 4/14

(54) **Objektüberwachung**
Building monitoring
Surveillance d'objet

(30) Priorität: 08.08.2011 DE 102011080618
(43) Veröffentlichungstag der Anmeldung: 13.02.2013
(73) Patentinhaber: Atos IT Solutions and Services GmbH, 81739 München (DE)
(72) Erfinder: Thronicke, Wolfgang, 33154 Salzkotten (DE)
(74) Vertreter: IPAZ

(56) Entgegenhaltungen:
- US-A- 4 990 893
- US-A1- 2003 028 350
- US-A1- 2007 247 331
- US-A1- 2009 045 976
- US-A1- 2011 025 519
- US-B1- 6 862 540

## Beschreibung

Die Erfindung betrifft ein Verfahren und ein Computerprogrammprodukt zur Überwachung eines Objekts. Insbesondere betrifft die Erfindung eine Überwachung des Objekts auf der Basis einer Aufnahme eines Versorgungsguts aus einem Versorgungsnetz durch das Objekt.

### Stand der Technik

Um ein größeres Objekt von Wert, etwa eine technische Anlage oder eine Wohnung, gegen unbefugten Zugriff zu sichern, sind unterschiedliche Alarmanlagen im Stand der Technik bekannt. Die Mehrzahl dieser Alarmanlagen überwacht eine Anzahl von Sensoren, die an Bedienungsoder Zugangseinrichtungen des Objekts angebracht sind, und gibt ein Alarmsignal aus, wenn ein unbefugter Zugriff erfasst wird.

Die Einrichtung einer solchen Alarmanlage ist aufwendig, da in der Regel die Sensoren angebracht und in einer geeigneten Weise mit einer Auswerteeinrichtung verbunden werden müssen. Außerdem ist es sinnvoll, einen eigenen Sensor an jeder vorgesehenen Zugangs- oder Bedieneinrichtung vorzusehen. Das macht die Installation und den Betrieb einer solchen Alarmanlage aufwendig und komplex. Ferner sind die Sensoren für einen Eindringling häufig leicht erkennbar, sodass die Alarmanlage gezielt umgangen oder sabotiert werden kann.

Die US 4,900,893 A offenbart ein Objektüberwachungsverfahren, bei dem der Energieverbrauch in einer Wohnung erfasst und mit einem Erwartungswert verglichen wird, um bei einer nicht tolerierten Abweichung einen Alarm auszulösen.

Die US 2009/045976 A1 beschreibt eine Objektüberwachung, bei der eine Versorgungsgutaufnahme überwacht wird, um Abweichungen gegenüber einem Erwartungswert, bei dem auch vergleichbare Objekte berücksichtigt werden, festzustellen.

Die Aufgabe der Erfindung besteht darin, ein Verfahren und ein Computerprogrammprodukt zur Überwachung eines Objekts anzugeben, die bereits bestehende Infrastruktur verwenden, um mit geringem Aufwand das Objekt durch Überwachung abzusichern.

Die Erfindung löst diese Aufgabe mittels eines Verfahrens und eines Computerprogrammprodukts mit den Merkmalen der unabhängigen Ansprüche. Unteransprüche geben bevorzugte Ausführungsformen wieder.

### Offenbarung der Erfindung

Ein erfindungsgemäßes Verfahren zur Überwachung eines Objekts, das mit einem Versorgungsnetz zur Versorgung mit einem Versorgungsgut verbunden ist, umfasst die Merkmale von Anspruch 1.

Durch den Vergleich der Aufnahme mit den Aufnahmen der vergleichbaren Objekte können Einflüsse auf die Aufnahme, die auch die vergleichbaren Objekte betreffen, berücksichtigt werden, um einen Fehlarlarm zu verhindern. Der Vergleichswert kann insbesondere einen Durchschnitt der Aufnahmen der vergleichbaren Objekte umfassen.

Das Objekt kann beispielsweise eine Wohnung oder ein Haushalt sein. Derartige Objekte verfügen üblicherweise bereits über Anschlüsse zu Versorgungsnetzen und Verbrauchszähler für die aus den Versorgungsnetzen aufgenommenen Versorgungsgüter wie Gas, Wasser oder Strom.

Die Verbrauchszähler sind häufig mit einer elektronischen Schnittstelle ausgestattet, sodass ein elektronisches oder computerbasiertes Auswerten unterschiedlicher Aufnahmen von Versorgungsgütern durch das Objekt mit geringem Aufwand durchführbar sein kann.

Die bestimmte Aufnahme des Versorgungsguts kann zur weiteren Auswertung an eine zentrale Auswertestelle übermittelt werden. Beispielsweise können die Bestimmung und Übermittlung der Aufnahme des Objekts - wie auch die der vergleichbaren Objekte - durch intelligente Verbrauchszähler, so genannte "smart meter" erledigt werden. Seitens des Objekts kann so keine weitere Vorrichtung erforderlich sein, um die Alarmfunktion bilden zu können. Die Auswertung der übermittelten Aufnahme seitens der zentralen Auswertestelle kann vereinfacht durchgeführt werden, da hier auch die Aufnahmen der vergleichbaren Objekte vorliegen können. An der Auswertestelle können die Aufnahmen zum Messzeitpunkt, aber auch von zurückliegenden Zeitpunkten, verarbeitet, beispielsweise in Form eines Durchschnitts, oder auch unverarbeitet vorliegen. Eine Bestimmungsgeschwindigkeit und/oder -genauigkeit können so gesteigert sein. Außerdem können so mit geringem Aufwand mehrere Objekte überwacht werden.

Es sind mehrere Aufnahmeprofile vorbestimmt die unterschiedlichen Betriebszuständen des Objekts zugeordnet sind, wobei das Verfahren weiter die Schritte des Erfassens einer Benutzereingabe und des Aktivierens eines korrespondierenden Aufnahmeprofils umfasst.

Das Aufnahmeprofil kann somit durch den Benutzer an einen Betriebszustand des Objekts angepasst werden, um eine verbesserte Bestimmung des Alarmsignals zu ermöglichen. Beispielsweise können ein erstes Aufnahmeprofil für eine übliche Nutzung, ein zweites Aufnahmeprofil für eine intensive Nutzung und ein drittes Aufnahmeprofil für eine minimale Nutzung des Objekts vorgesehen sein. Der Benutzer kann auf diese Weise bei der korrekten Generierung des Alarmsignals mitwirken.

Das Aufnahmeprofil kann Aufnahmen des Versorgungsguts und zugeordnete tolerierbare Abweichungen über einen vorbestimmten zeitlichen Abschnitt umfassen. Vorzugsweise bezieht sich das Aufnahmeprofil auf einen Zeitraum, in dem ein zyklischer Verlauf der Aufnahme des Versorgungsguts durch das Objekt zu erwarten ist, beispielsweise einen Tag oder eine Woche. Phasen, in denen größere Abweichungen zu erwarten sind, beispielsweise während einer Benutzung des Objekts durch eine gesteigerte Anzahl Personen, können eine höhere zugeordnete tolerierbare Abweichung aufweisen als andere Phasen, in denen beispielsweise niemand am Objekt anwesend ist. Die Trennschärfe des bereitgestellten Alarmsignals kann dadurch weiter erhöht werden.

In einer Ausführungsform des Verfahrens können die Aufnahmen mehrerer unterschiedlicher Versorgungsgüter aus unterschiedlichen Versorgungsnetzen ausgewertet werden. In Fortführung des obigen Beispiels kann etwa eine Aufnahme von elektrischem Strom mit einer Aufnahme von Gas oder Wasser korreliert werden, um eine verbesserte Bestimmung, ob sich der Betriebszustand des Objekts in einem erwarteten Rahmen befindet oder nicht, zu erlauben.

Die vergleichbaren Objekte können auf der Basis von zurückliegenden Aufnahmen des Versorgungsguts durch das Objekt bestimmt sein. In obigem Beispiel kann dem Objekt eine Menge vergleichbarer Objekte zugeordnet werden, deren Aufnahmen zu zurückliegenden Zeitpunkten ähnlich zu den Aufnahmen des betrachteten Objekts waren. Dabei kann die Ähnlichkeit auf der Basis eines absoluten Vergleichs der jeweils aufgenommenen Mengen des Versorgungsguts und/oder auf der Basis eines Vergleichs einer zeitlichen Tendenz der Aufnahmen bestimmt sein.

In einer Ausführungsform sind die vergleichbaren Objekte auf der Basis ihrer geographischen Entfernungen zum Objekt bestimmt. So können lokale Einflussfaktoren wie eine öffentliche Veranstaltung oder eine lokale Witterung berücksichtigt werden. Die geographische Entfernung eines vergleichbaren Objekts kann aussagekräftig für einen Korrelationsgrad mit dem betrachteten Objekt sein. Wird der Vergleichswert als Durchschnitt gebildet, so kann die geographische Entfernung als Gewichtungsfaktor in die Durchschnittsbildung einfließen, um nahe am Objekt gelegene vergleichbare Objekte stärker zu gewichten als weit entfernte.

Erfindungsgemäß wird ein zum Messzeitpunkt korrespondierender, weiterer Vergleichswert auf der Basis eines vorbestimmten Aufnahmeprofils des Objekts gebildet, wobei das Alarmsignal nur ausgegeben wird, wenn zusätzlich die bestimmte Aufnahme um mehr als ein vorbestimmtes Maß vom weiteren Vergleichswert abweicht. Dadurch kann ein übliches Aufnahmeverhalten des Objekts berücksichtigt werden. Weicht beispielsweise die Aufnahme des Objekts von den Aufnahmen der vergleichbaren Objekte ab, liegt aber im Bereich einer für dieses Objekt erwarteten Aufnahme, so kann das Alarmsignal unterdrückt werden.

Erfindungsgemäß sind außerdem mehrere Aufnahmeprofile vorbestimmt, welche unterschiedlichen Betriebszuständen des Objekts zugeordnet sind. Der Betriebszustand kann beispielsweise einen Normalbetrieb, einen Ferienbetrieb, eine Vakanz oder eine erhöhte Benutzerzahl des Objekts umfassen. Der Betriebszustand kann automatisch erkannt werden oder durch einen Benutzer des Objekts vorgegeben werden.

Ein erfindungsgemäßes Computerprogrammprodukt umfasst Programmcodemittel zur Durchführung des beschriebenen Verfahrens, wenn das Computerprogrammprodukt auf einer Verarbeitungseinrichtung abläuft. Das Computerprogrammprodukt kann auch auf einem computerlesbaren Datenträger gespeichert sein.

### Kurze Beschreibung der Figuren

Die Erfindung wird nun mit Bezug auf die beigefügten Figuren genauer beschrieben, in denen:
Figur 1 einen Haushalt mit intelligentem Verbrauchszähler an einem Versorgungsnetz;
Figur 2 mehrere Haushalte an mehreren Versorgungsnetzen;
Figur 3 ein beispielhaftes Aufnahmeprofil von Aufnahmen des Haushalts der Figuren 1 oder 2; und
Figur 4 ein Ablaufdiagramm eines Verfahrens zur Überwachung eines Objekts wie einem der Haushalte aus den Figuren 1 oder 2.

### Genaue Beschreibung von Ausführungsbeispielen

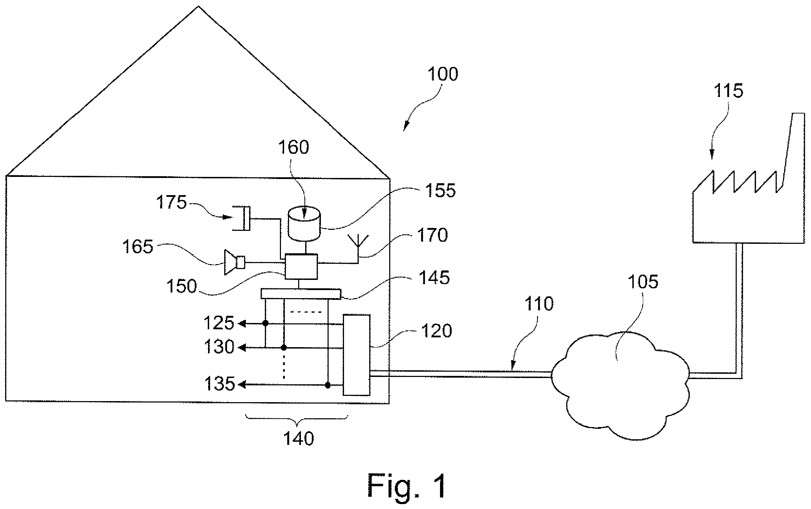

Figur 1 zeigt ein Objekt 100, das mit einem Versorgungsnetz 105 verbunden ist. Das Objekt 100 kann ein beliebiges Objekt sein, das mit dem Versorgungsnetz 105 verbunden ist. Bevorzugterweise handelt es sich beim Objekt 100 um einen Haushalt oder eine Wohneinheit, in der Personen wohnen oder arbeiten können. Es kann jedoch auch eine Anlage, ein Gebäude oder eine andere technische Infrastruktur durch das Objekt 100 modelliert sein.

Das Versorgungsnetz 105 stellt ein Versorgungsgut 110 bereit, um den Betrieb des Objekts 100 zu ermöglichen. Das Versorgungsgut 110 kann insbesondere Wasser, Strom oder Gas umfassen.

Das Versorgungsgut 110 kann sowohl vom Versorgungsnetz 105 zum Objekt 100 als auch in umgekehrter Richtung transportiert werden. An der Stelle von Wasser kann beispielsweise Abwasser vom Objekt 105 weg transportiert werden, wobei das Versorgungsnetz 105 als Entsorgungsnetz fungiert. In einer weiteren Ausführungsform kann der Objekt 100 das Versorgungsgut 110 auch in das Versorgungsnetz 105 einspeisen, beispielsweise in Form von elektrischem Strom, der mittels einer Photovoltaikanlage oder eines Kleinstkraftwerks generiert wurde. In einer Ausführungsform kann das Versorgungsgut 110 auch bidirektional zwischen dem Objekt 100 und dem Versorgungsnetz 105 ausgetauscht werden.

Üblicherweise wird das Versorgungsnetz 105 hauptsächlich durch einen Versorgungsbetrieb 115 gespeist, der das Versorgungsgut 110 bereitstellt. Der Versorgungsbetrieb 115 kann beispielsweise ein Kraftwerk sein, wenn das Versorgungsgut 110 elektrischen Strom umfasst, ein Wasserwerk, in das Versorgungsgut 110 Trink- oder Brauchwasser umfasst oder ein Gaswerk, wenn das Versorgungsgut 110 Gas, insbesondere Brenngas, umfasst.

Ohne Beschränkung der Allgemeinheit wird im Folgenden davon ausgegangen, dass das Versorgungsgut 110 vom Versorgungsnetz 105 zum Objekt 100 transportiert wird. Im Bereich des Objekts 100 befindet sich ein optionaler Verteiler 120 zur Verteilung des Versorgungsguts 110 auf einzelne Verbraucher 125 bis 135. Entfällt der Verteiler 120, so werden alle Verbraucher 125 bis 135, die im Rahmen des Objekts 100 mit dem Versorgungsnetz 105 verbunden sind, undifferenziert mit dem Versorgungsgut 110 versorgt.

Im Bereich des Verteilers 120 findet sich ein Verbrauchszähler 140 zur Bestimmung einer Aufnahme des Versorgungsguts 110 aus dem Versorgungsnetz 105. Der Verbrauchszähler 140 umfasst eine Messeinrichtung 145, eine Verarbeitungseinrichtung 150 und einen Speicher 155. Der Verbrauchszähler 140 ist bevorzugter Weise ein sogenannter intelligenter Verbrauchszähler ("smart meter"), der in der beschriebenen oder einer ähnlichen Ausführungsform bereits bekannt und vielfach in Verwendung ist. Die Messeinrichtung 145 ist dazu eingerichtet, die Aufnahmen von Versorgungsgut 110 durch die Verbraucher 125 bis 135 zu bestimmen. Es ist von Vorteil, wenn diese Abtastung möglichst differenziert erfolgt, die Aufnahme des Versorgungsguts 110 also bezüglich der Verbraucher 125 bis 135 diskret und mit ausreichend hoher zeitlicher Auflösung erfolgt.

Die Messeinrichtung 145 ist mit der Verarbeitungseinrichtung 150 verbunden, die dazu eingerichtet ist, die abgetasteten Aufnahmen zu verarbeiten. Die Verarbeitungseinrichtung 150 ist ferner mit dem optionalen Speicher 155 verbunden, der dazu eingerichtet ist, eines oder mehrere Aufnahmeprofile 160 aufzunehmen. Dabei ist ein Aufnahmeprofil 160 eine Repräsentation einer erwarteten Aufnahme des Versorgungsguts 110 über die Zeit. Die erwartete Aufnahme kann auf der Basis zurückliegender Aufnahmen des Versorgungsguts 110 durch das Objekt 100 bestimmt sein. In weiteren Ausführungsformen können die Aufnahmeprofile 160 auch noch weitere Informationen umfassen, insbesondere tolerierbare Abweichungen von den Aufnahmen.

Die Verarbeitungsreinrichtung 150 bestimmt die Aufnahmen der Verbraucher 125 bis 135 zu einem Messzeitpunkt t. In einer Ausführungsform vergleicht sie dann die bestimmten Aufnahmen mit einem oder mehreren Vergleichswerten, die sie aus den Aufnahmeprofilen 160 bestimmt. Zur Synchronisierung kann eine nicht dargestellte Zeitbasis vorgesehen sein. Die Verarbeitungseinrichtung 150 prüft dann, ob die Aufnahme um mehr als ein vorbestimmtes Maß vom Vergleichswert abweicht. Die Abweichung kann positiv oder negativ sein, je nachdem ob einer der Verbraucher 135 mehr oder weniger Versorgungsgut 110 als erwartet aufnimmt.

Das vorbestimmte Maß kann ein konstanter Wert oder ein vorbestimmter Bruchteil des jeweiligen, aus dem Aufnahmeprofil 160 bestimmten Vergleichswerts sein. In einer anderen Ausführungsform kann das vorbestimmte Maß ein zeitabhängiger Wert sein, der vom Aufnahmeprofil 160 umfasst bzw. repräsentiert wird. Weicht die Aufnahme um mehr als das vorbestimmte Maß vom Vergleichswert ab, so gibt die Verarbeitungseinrichtung 150 ein Alarmsignal aus.

In einer Ausführungsform ist eine Ausgabeeinrichtung 165 vorgesehen, um das Alarmsignal im Bereich des Objekts 100 beispielsweise akustisch oder optisch auszugeben. Zusätzlich oder alternativ kann die Verarbeitungseinrichtung 150 mit einer Übertragungseinrichtung 170 verbunden sein, um das Alarmsignal an einer anderen Stelle auszugeben. Die Übertragungseinrichtung 170 kann insbesondere eine drahtlose oder drahtgebunde Einrichtung sein.

In einer Ausführungsform kann die Übertragung des Alarmsignals über die Verbindung zum Versorgungsnetz 105 erfolgen. Handelt es sich beim Versorgungsgut 110 um elektrischen Strom, so kann die Übertragung beispielsweise mittels Signalmodulation auf die entsprechende Stromleitung erfolgen. Ein Empfänger des Alarmsignals kann beispielsweise ein öffentlicher Dienst wie eine Polizei oder eine Feuerwehr oder ein privater Dienst wie ein Bewachungsunternehmen sein.

In einer weiteren Ausführungsform ist eine mit der Verarbeitungseinrichtung 150 verbundene Benutzerschnittstelle 175 vorgesehen, die es einem Benutzer des Objekts 100 ermöglicht, die Bereitstellung des Alarmsignals zu beeinflussen. Insbesondere kann die Benutzerschnittstelle 175 dazu verwendbar sein, unterschiedliche Aufnahmeprofile 160 zu aktivieren, zu erstellen oder zu bearbeiten. Den Vorlieben und Gewohnheiten des Benutzers des Objekts 100 kann auf diese Weise Rechnung getragen werden. Eine Absicherung der Benutzerschnittstelle 175 gegen unbefugten Zugriff kann dabei mit bekannten technischen Mitteln erfolgen.

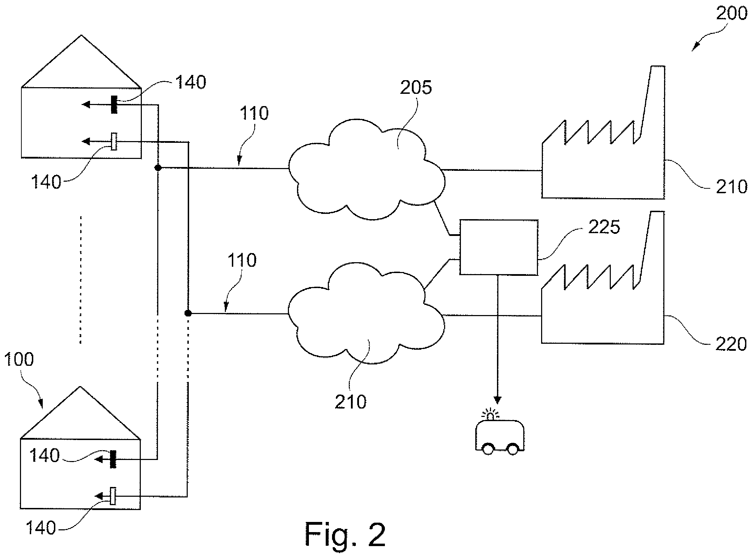

Figur 2 zeigt eine Darstellung 200 mehrerer Objekte 100 wie dem aus Figur 1 an mehreren Versorgungsnetzen 105. Die Darstellung 200 visualisiert zwei Verallgemeinerungen der Darstellung von Figur 1, nämlich einerseits die parallele Überwachung mehrere Objekte 100 durch nur eine zentrale Instanz, und andererseits die Überwachung eines Objekts 100, der an mehrere Versorgungsnetze 205, 210 angeschlossen ist. Diese beiden Verallgemeinerungen können auch einzeln auftreten oder auch in Mischformen vorliegen, etwa wenn nicht alle betrachteten Objekte an alle Versorgungsnetze angeschlossen sind.

Jedes Objekt 100 ist an ein erstes Versorgungsnetz 205 und ein zweites Versorgungsnetz 210 angeschlossen, die jeweils dem Versorgungsnetz 105 aus Figur 1 entsprechen, aber üblicherweise unterschiedliche Versorgungsgüter 110 bereitstellen. Dem ersten Versorgungsnetz 205 ist ein erster Versorgungsbetrieb 215 und dem zweiten Versorgungsnetz 210 ein zweiter Versorgungsbetrieb 220 zugeordnet.

Ferner ist eine zentrale Auswertestelle 225 vorgesehen, die in Verbindung mit den einzelnen Objekten 100 steht. In Anlehnung an das oben mit Bezug auf Figur 1 gegebene Ausführungsbeispiel kann die Übermittlung von Informationen zwischen den Objekten 100 und der zentralen Auswertestelle 225 über eines der Versorgungsnetze 205 und 210 erfolgen. Alternativ kann jedoch auch ein dediziertes Kommunikationsnetz hierfür verwendet werden, etwa ein drahtgebundenes oder drahtloses Telefon- oder Datennetz.

In einer ersten Ausführungsform bestimmen die Verbrauchszähler 140 in den Objekten 100 das Alarmsignal wie oben mit Bezug auf Figur 1 beschrieben ist und übermitteln es bei Bedarf an die zentrale Auswertestelle 225, woraufhin diese externe Maßnahmen einleiten kann, wie beispielsweise einen Hausbesuch durch ein Wachpersonal oder einen Wartungstechniker.

Die Benutzerschnittstelle 175 kann auch auf eine andere Weise als in Fig. 1 gebildet sein, beispielsweise durch einen Computer, der mittels eines Kommunikationsnetzes mit der zentralen Auswertestelle 225 verbunden ist. Der Computer muss sich dann auch nicht im Bereich des Objekts 100 befinden, sondern kann an einer beliebigen Stelle angeordnet oder mobil benutzbar sein.

In einer zweiten Ausführungsform übermitteln die Objekte 100 jeweils die lokal bestimmten Aufnahmen der Versorgungsgüter 110 an die zentrale Auswertestelle 225, wobei eine weitere Verarbeitung seitens der zentralen Auswertestelle 225 durchgeführt wird. Die zentrale Auswertestelle 225 empfängt die Aufnahmen und kann insbesondere eine empfangene Aufnahme in Relation setzen mit empfangenen Aufnahmen vergleichbarer Objekte 100 zum gleichen Messzeitpunkt.

In einer weiteren Ausführungsform kann die zentrale Auswertestelle 225 auch dazu eingerichtet sein, die Aufnahmen der unterschiedlichen Objekte 100 individuell oder statistisch miteinander zu vergleichen.

Insbesondere kann die zentrale Auswertestelle 225 aus einer Vielzahl Objekte 100 solche auswählen, die mit einem Objekt 100 vergleichbar sind. Die Vergleichbarkeit kann sich etwa aus einer geographischen Nähe der Objekte 100 ergeben oder aus sich ähnelnden historischen Aufnahmen des Versorgungsguts 110. Es können auch andere Kriterien zur Bestimmung einer Vergleichbarkeit der Objekte 100 benutzt werden.

Ferner kann die zentrale Auswertestelle 225 aus den Aufnahmen der vergleichbaren Objekte 100 zum Messzeitpunkt einen Vergleichswert bilden, etwa durch Mittelwertbildung. Dann kann die Aufnahme des Objekts 100 mit dem Vergleichswert verglichen werden um zu bestimmen, ob eine Abweichung vorliegt, die ein vorbestimmtes Maß übersteigt.

Liegt in einem illustrierenden Beispiel bei einer Anzahl Objekten 100 in einem vorbestimmten geographischen Gebiet eine Aufnahme von Brenngas wegen kalter Witterung besonders hoch, so kann eine davon abweichende niedrige Aufnahme in einem der Objekte 100 auf eine Fehlfunktion der dort installierten Heizung hinweisen, die einen Verbraucher im Sinne der Verbraucher 125 bis 135 von Figur 1 darstellt. In einem anderen Beispiel können die Stromaufnahmen mehrerer Objekte 100 temporär von den Vergleichswerten der Aufnahmeprofile 160 abweichen, weil Benutzer dieser Objekte Schwierigkeiten bei der Umstellung zwischen Sommer- und Winterzeit haben. Durch die Betrachtung der Vielzahl von Objekten 100 kann somit die Ausgabe von Alarmen unterdrückt werden, auch wenn der Grund für die Abweichungen nicht im Einzelnen bekannt ist.

Ferner kann die zentrale Auswertestelle 225 bestimmen, ob eine empfangene Aufnahme hinreichend genau einem Aufnahmeprofil entspricht oder nicht. Die zentrale Auswertestelle 225 kann zu diesem Zweck eine Anzahl Aufnahmeprofile 160 vorhalten, die den einzelnen Objekten 100 zugeordnet sind. In noch einer Ausführungsform kann die Aufnahme seitens des Objekts 100 bezüglich Konformität mit einem Aufnahmeprofil untersucht werden. Entspricht die Aufnahme nicht der des betrachteten Aufnahmeprofils, so kann das Objekt 100 ein entsprechendes Signal an die zentrale Auswertestelle 225 senden, die dann überprüft, ob die Aufnahme des Objekts 100 einem Vergleichswert entspricht, der auf der Basis von Aufnahmen des Versorgungsguts 110 durch vergleichbare Objekte 100 zum Messzeitpunkt gebildet ist.

In allen Fällen ist die Ausgabe des Alarmsignals auf der Basis des Vergleichs der bestimmten Aufnahme mit einem Aufnahmeprofil oder mit einem Vergleichswert auf der Basis der Aufnahmen der vergleichbaren Objekte möglich. Erfindungsgemäß wird das Alarmsignal nur dann ausgegeben, wenn beide Kriterien auf eine auffällige Aufnahme des Versorgungsguts 110 durch das Objekt 100 hinweisen.

Die Aufnahmen der Versorgungsgüter 110 aus den Versorgungsnetzen 205 und 210 können einzeln betrachtet oder miteinander korreliert werden. Liegen beispielsweise die Aufnahmen von Wasser, Strom und Gas oberhalb der vorbestimmten Vergleichswerte, so kann dies auf eine größere Anzahl von Personen, die sich in dem Objekt 100 aufhalten, hinweisen. Die Korrelationen können vom ausgewählten Aufnahmeprofil 160 abhängig sein. Ist beispielsweise ein Aufnahmeprofil 160 ausgewählt, das besagt, dass sich urlaubsbedingt keine Personen im Objekt 100 aufhalten, so kann eine geringfügig erhöhte Aufnahme von elektrischem Strom tolerierbar sein, während eine erhöhte Aufnahme von Wasser und oder Gas für einen unbefugten Zugriff einer anderen Person auf den Objekt 100 spricht.

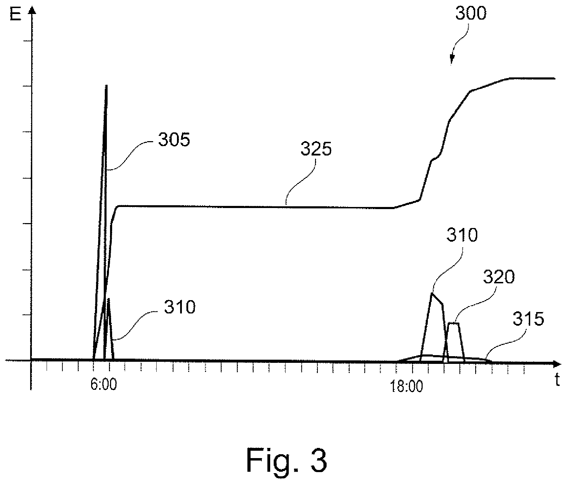

Figur 3 zeigt ein beispielhaftes Aufnahmeprofil 300 von Aufnahmen eines Objekts 100 aus den Figuren 1 oder 2. In horizontaler Richtung ist eine Zeit und in vertikaler Richtung eine aus dem jeweiligen Versorgungsnetz 105 aufgenommene Energie angetragen. Eine Darstellung eines nicht energiebasierten Versorgungsguts 110 ist in Figur 3 nicht vorgesehen aber sinngemäß genauso möglich.

Eine erste Aufnahme 305 betrifft eine Heizung, bei der das Versorgungsgut 110 Gas ist. Eine zweite Aufnahme 310 betrifft einen elektrischen Herd, eine dritte Aufnahme 315 Licht bzw. einen Fernseher und eine vierte Aufnahme 320 einer Waschmaschine, die alle mit dem Versorgungsgut 110 Strom versorgt werden. Darüber hinaus ist eine kumulative Gesamtaufnahme 325 von Energie eingezeichnet.

Das Aufnahmeprofil 300 entspricht einem Einpersonen-Haushalt 100 an einem Werktag. Eine hohe Energieaufnahme zwischen ca. 6:00 und ca. 18:00 Uhr entspricht nicht dem Aufnahmeprofil 300 und einer entsprechend festgestellte Aufnahme kann zur Ausgabe des Alarmsignals führen. Weitere Einzelheiten des Aufnahmeprofils 300 sind aus den gezeigten üblichen Aufnahmen einzeln ableitbar, wobei Schlussfolgerungen über einen tatsächlichen Betriebszustand bzw. eine Benutzung des Objekts 100 um so zutreffender sein können, je detaillierter die einzelnen Aufnahmen 305 bis 320 vorliegen. Eine summatorische Betrachtung ist auf der Basis der Gesamtaufnahme 325 möglich.

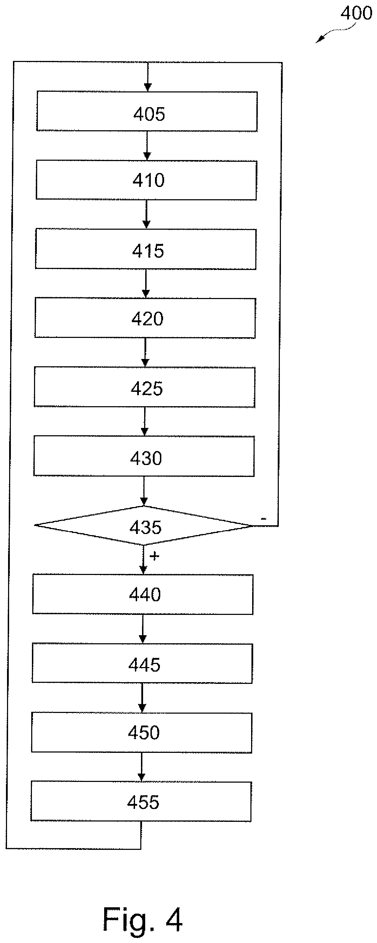

Figur 4 zeigt ein Ablaufdiagramm eines Verfahrens 400 zur Überwachung eines Objekts 100 aus den Figuren 1 oder 2. Die Erläuterung des Verfahrens 400 erfolgt ohne Beschränkung der Allgemeinheit erläuternd mit Bezug auf einen Haushalt.

In einem ersten Schritt 405 wird eine Benutzereingabe erfasst, die ein Benutzer des Objekts 100 beispielsweise an der Benutzerschnittstelle 175 tätigt. Auf der Basis der Eingabe wird in einem folgenden Schritt 410 ein Aufnahmeprofil 460 ausgewählt.

Anschließend wird in einem Schritt 415 eine Aufnahme des jeweiligen Versorgungsguts 110 durch das Objekt 100 erfasst. Dies kann eine diskrete Bestimmung von Aufnahmen einzelner Verbraucher 125 bis 135 umfassen oder eine summatorische Betrachtung. Ferner können die Aufnahmen aus mehreren Versorgungsnetzen 205, 210 betrachtet werden.

Auf der Basis eines Messzeitpunkts der Erfassung von Schritt 415 wird in einem anschließenden Schritt 420 ein Vergleichswert aus dem im Schritt 410 ausgewählten Aufnahmeprofil bestimmt.

In einem anschließenden Schritt 425 wird ferner eine tolerierbare Abweichung der erfassten Aufnahme vom bestimmten Vergleichswert bestimmt. Die tolerierbare Abweichung kann Teil des Aufnahmeprofils 160 sein. Sowohl der Vergleichswert als auch die tolerierbare Abweichung können auf der Basis von bestimmten Aufnahmen weiterer Objekte 100 angepasst werden, beispielsweise im Wege einer Mittelwertbildung.

In einem Schritt 430 werden die Aufnahme und der Vergleichswert miteinander verglichen. Es wird zusätzlich zu den Schritten 410 bis 425 auch ein zweiter Vergleichswert für Aufnahme des Versorgungsguts 110 auf der Basis vergleichbarer Objekte 100 bestimmt und im Schritt 430 wird ein Vergleich der Aufnahme mit dem zweiten Vergleichswert durchgeführt.

In einem Schritt 435 wird bestimmt, ob die bestimmte Aufnahme von wenigstens einem der Vergleichswerte, erfindungsgemäß aber von beiden Vergleichswerten, abweicht bzw. die jeweilige Abweichung ein tolerierbares Maß übersteigt. Ist dies nicht der Fall, so kann optional das Aufnahmeprofil 160 auf der Basis der erfassten Aufnahme angepasst werden. Anschließend kehrt das Verfahren 400 zurück zum Schritt 405.

Andernfalls kann das Verfahren 400 mit einem Schritt 440 fortfahren, in welchem aus weiteren Aufnahmeprofilen 160 weitere Vergleichswerte bestimmt werden, wie oben mit Bezug auf Schritt 420 ausgeführt ist.

In einem nachfolgenden Schritt 445 wird dann die Aufnahme mit den weiteren Vergleichswerten verglichen. Ist das Verfahren 400 bereits mehrfach bis zu diesem Punkt durchlaufen, so kann insbesondere eine zeitliche zusammenhängende Serie von Aufnahmen mit dazu korrespondierenden zeitlichen Aufnahmen unterschiedlicher Aufnahmeprofilen 160 verglichen werden. Ziel des Vergleichs von Schritt 445 ist es, ein Aufnahmeprofil 160 zu finden, das der unerwarteten Aufnahme von Versorgungsgütern 110 entspricht.

In Schritt 450 wird überprüft, ob ein korrespondierendes Aufnahmeprofil 160 gefunden wurde. Ist dies nicht der Fall, so wird in einem nachfolgenden Schritt 455 ein allgemeines Alarmsignal ausgegeben. Steht jedoch ein passendes Aufnahmeprofil 160 zur Verfügung, so wird im Schritt 455 ein spezifisches Alarmsignal ausgegeben, das auf das identifizierte Aufnahmeprofil 160 hinweist.

Das Alarmsignal kann im Schritt 455 auch ausgegeben werden, wenn in einer weiteren Ausführungsform die Schritte 440 bis 450 nicht implementiert sind.

Eine Unterscheidung, ob Aufnahmen des identifizierten Aufnahmeprofils 160 eine kritische oder eine unkritische Abweichung darstellen, kann automatisch erfolgen, indem kritische und unkritische Aufnahmeprofile vorbestimmt sind, oder einem Benutzer überlassen werden. Der Benutzer kann der Benutzer des Objekts 100 sein oder beispielsweise ein Bedienpersonal der zentralen Auswertestelle 225.

In jedem Fall kehrt das Verfahren 400 zurück zum Schritt 405 und durchläuft erneut.

Der Kern der vorliegenden Erfindung wird durch die Schritte in Anspruch 1 gebildet.

### Bezugszeichenliste

- 100: Haushalt
- 105: Versorgungsnetz
- 110: Versorgungsgut
- 115: Versorgungsbetrieb
- 120: Verteiler
- 125: erster Verbraucher
- 130: zweiter Verbraucher
- 135: dritter Verbraucher
- 140: Verbrauchszähler
- 145: Messeinrichtung
- 150: Verarbeitungseinrichtung
- 155: Speicher
- 160: Aufnahmeprofil
- 165: Ausgabeeinrichtung
- 170: Übertragungseinrichtung
- 175: Benutzerschnittstelle

- 200: Darstellung
- 205: erstes Versorgungsnetz
- 210: zweites Versorgungsnetz
- 215: erster Versorgungsbetrieb
- 220: zweiter Versorgungsbetrieb
- 225: zentrale Auswertestelle

- 300: Aufnahmeprofil
- 305: erste Aufnahme: Gas
- 310: zweite Aufnahme: Herd
- 315: dritte Aufnahme: Licht / TV
- 320: vierte Aufnahme: Waschmaschine
- 325: Gesamtaufnahme
- 405: Erfassen Benutzereingabe
- 410: Auswählen Aufnahmeprofil
- 415: Erfassen Aufnahme Versorgungsgut
- 420: Bestimmen Vergleichswert auf der Basis des Aufnahmeprofils
- 425: Bestimmten tolerierbare Abweichung
- 430: Vergleichen Aufnahme mit Vergleichswert
- 435: Abweichung > tolerierbare Abweichung?
- 440: Bestimmen weiterer Vergleichswerte aus weiteren Aufnahmeprofilen
- 445: Vergleichen Aufnahme mit weiteren Vergleichswerten
- 450: korrespondierendes Aufnahmeprofil gefunden?
- 455: Ausgeben Alarm

## Patentansprüche

1. Verfahren (400) zur Überwachung eines Objekts (100) zum Sichern gegen unbefugten Zugriff, wobei das Objekt (100) mit einem Versorgungsnetz (105) zur Versorgung mit einem Versorgungsgut (110) verbunden ist, und wobei mehrere Aufnahmeprofile (160) des Vorsorgungsguts vorbestimmt sind, die unterschiedlichen Betriebszuständen des Objekts (100) zugeordnet sind, umfassend folgende Schritte:
- Erfassen (405) einer Benutzereingabe durch einen Benutzer des Objekts (100);
- Auswählen (410) eines Aufnahmeprofils des Vorsorgungsguts (110) auf der Basis der Benutzereingabe;
- Erfassen (415) einer Aufnahme von Versorgungsgut (110) durch das Objekt (100) zu einem Messzeitpunkt (t);
- Bestimmen (420), bezogen auf den Messzeitpunkt (t), eines ersten Vergleichswertes aus dem Aufnahmeprofil und eines zweiten Vergleichswertes auf der Basis der Versorgungsgutaufnahme vergleichbarer Objekte;
- Vergleichen (430) der erfassten Versorgungsgutaufnahme mit dem ersten Vergleichswert aus dem Aufnahmeprofil und mit dem zweiten Vergleichswert auf der Basis der Versorgungsgutaufnahme vergleichbarer Objekte;
- falls die Versorgungsgutaufnahme jeweils um mehr als ein vorbestimmtes Maß vom ersten und zweiten Vergleichswert abweicht, Ermitteln (450) eines korrespondierenden Aufnahmeprofils, das der unerwarteten Aufnahme von Versorgungsgütern 110) entspricht, und,
falls ein korrespondierendes Aufnahmeprofil ermittelt wird, Ausgeben (455) eines spezifisches Alarmsignal, das auf das identifizierte Aufnahmeprofil hinweist, andernfalls Ausgeben (455) eines allgemeinen Alarmsignal.

2. Verfahren (400) nach Anspruch 1, wobei die vergleichbaren Objekte (100) auf der Basis von zurückliegenden Aufnahmen des Versorgungsguts (110) durch das Objekt (100) bestimmt werden.

3. Verfahren (400) nach Anspruch 1, wobei die vergleichbaren Objekte (100) auf der Basis ihrer geographischen Entfernungen zum Objekt (100) bestimmt werden.

4. Computerprogrammprodukt mit Programmcodemitteln zur Durchführung des Verfahrens (400) nach einem der vorangehenden Ansprüche, wenn das Computerprogrammprodukt auf einer Verarbeitungseinrichtung (150, 225) abläuft oder auf einem computerlesbaren Datenträger gespeichert ist.

## Claims

1. Method (400) for monitoring a building (100) for securing against unauthorized access, wherein the building (100) is connected to a supply network (105) for supplying a commodity (110), and wherein a plurality of consumption profiles (160) of the commodity are pre-determined which are assigned to different operating states of the building (100), said method comprising the following steps:
- recording (405) a user input by a user of the building (100);
- selecting (410) a consumption profile of the commodity (110) based on the user input;
- recording (415) a consumption of a commodity (110) by the building (100) at a measurement time (t);
- determining (420) a first comparison value from the consumption profile and a second comparison with reference to the measurement time (t) based on the commodity consumption of comparable buildings;
- comparing (430) the recorded commodity consumption with the first comparison value from the consumption profile and with the second comparison value based on the commodity consumption of comparable buildings;
- if the commodity consumption deviates from the first and second comparison values by more than a predetermined measure, determining (450) a corresponding consumption profile that corresponds to the unexpected consumption of commodities (110), and,
if a corresponding consumption profile is determined, outputting (455) a specific alarm signal indicating the identified consumption profile, otherwise outputting (455) a general alarm signal.

2. The method (400) according to Claim 1, wherein the comparable buildings (100) are determined on the basis of previous consumption rates of the commodity (110) by the building (100).

3. The method (400) according to Claim 1, wherein the comparable buildings (100) are determined on the basis of their geographical distances from the building (100).

4. Computer program product with program code means for carrying out the method (400) according to any of the preceding claims when the computer program product runs on a processing device (150, 225) or is stored on a computer-readable data carrier.

## Revendications

1. Procédé (400) de surveillance d'un objet (100) pour la sécurisation contre tout accès non autorisé, dans lequel l'objet (100) est relié à un réseau d'approvisionnement (105) pour approvisionner un bien d'approvisionnement (110) et dans lequel sont prédéfinis plusieurs profils de consommation (160) du bien d'approvisionnement, qui sont associés à différents états de fonctionnement de l'objet (100), comprenant les étapes suivantes :
- détecter (405) une entrée d'utilisateur par un utilisateur de l'objet (100) ;
- sélectionner (410) un profil de consommation du bien d'approvisionnement (110) sur la base de l'entrée d'utilisateur ;
- détecter (415) une consommation du bien d'approvisionnement (110) par l'objet (100) à un instant de mesure (t) ;
- déterminer (420) par rapport à l'instant de mesure (t) une première valeur de comparaison à partir du profil de consommation et une seconde valeur de comparaison sur la base de la consommation de bien d'approvisionnement d'objets comparables ;
- comparer (430) la consommation de bien d'approvisionnement détectée à la première valeur de comparaison à partir du profil de consommation et à la seconde valeur de comparaison sur la base de la consommation de bien d'approvisionnement d'objets comparables ;
- si la consommation de bien d'approvisionnement s'écarte de plus d'une mesure prédéfinie de la première et de la seconde valeur de comparaison respectivement, établir (450) un profil de consommation correspondant qui correspond à la consommation imprévue de biens d'approvisionnement (110), et,
si un profil de consommation correspondant est établi, émettre (455) un signal d'alarme spécifique, qui indique le profil de consommation identifié, dans le cas contraire, émettre (455) un signal d'alarme général.

2. Procédé (400) selon la revendication 1, dans lequel les objets comparables (100) sont déterminés sur la base de consommations précédentes du bien d'approvisionnement (110) par l'objet (100).

3. Procédé (400) selon la revendication 1, dans lequel les objets comparables (100) sont déterminés sur la base de leurs éloignements géographiques par rapport à l'objet (100).

4. Produit-programme d'ordinateur comprenant des moyens de codage de programme pour mettre en œuvre le procédé (400) selon l'une des revendications précédentes, lorsque le produit-programme d'ordinateur est exécuté sur un dispositif de traitement (150, 225) ou est enregistré sur un support de données lisible par ordinateur.
